# EUROPEAN PATENT SPECIFICATION

(11) **EP 3 209 081 B1**
(45) Date of publication and mention of the grant of the patent: **19.06.2019**
(21) Application number: 14884423.6
(22) Date of filing: 17.12.2014
(51) Int. Cl.: H04W 72/12

(54) **SERVICE SCHEDULING METHOD, DEVICE AND STORAGE MEDIUM**
DIENSTPLANUNGSVERFAHREN, VORRICHTUNG UND SPEICHERMEDIUM
PROCÉDÉ D'ORDONNANCEMENT DE SERVICE, DISPOSITIF ET SUPPORT DE STOCKAGE

(30) Priority: 15.10.2014 CN 201410545738
(43) Date of publication of application: 23.08.2017
(73) Proprietor: ZTE Corporation, Shenzhen, Guangdong 518057 (CN)
(72) Inventor: XU, Qianqian, Shenzhen Guangdong 518057 (CN)
(74) Representative: Lavoix
(86) International application number: PCT/CN2014/094125
(87) International publication number: WO 2015/131610

(56) References cited:
- EP-A1- 2 645 798
- WO-A1-2013/127665
- CN-A- 101 350 787
- CN-A- 101 765 144
- CN-A- 103 202 079
- CN-A- 103 428 870
- US-A1- 2013 336 124
- "3rd Generation Partnership Project; Technical Specification Group Services and System Aspects; Policy and charging control architecture (Release 13)", 3GPP DRAFT; 23203-D10_WITH_23203_CR0914_CRS_IMPLEMENTE D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 September 2014 (2014-09-17), XP050923667, Retrieved from the Internet: URL:http://www.3gpp.org/ftp/tsg_sa/WG2_Arc h/Latest_SA2_Specs/DRAFT_INTERIM/Archive/ [retrieved on 2014-09-17]

## Description

### TECHNICAL FIELD

The disclosure relates to mobile communications, and more particularly to a service scheduling method and device and storage medium in a wireless communication technology.

### BACKGROUND

In a current 3rd Generation Partnership Project (3GPP) protocol, services are divided into different types according to different attributes, and each type of service is represented by a Quality of Service (QoS) Class Identifier (QCI). The current 3GPP protocol presents 9 types of QCI services and each type of QCIs presents at least one example of the service. In addition, the current 3GPP protocol specifies attributes of resource type, priority, Packet Delay Budget (PDB) and Packet Error Loss Rate (PER) of the type of services.

Although the current 3GPP protocol only presents the 9 types of QCI services, the specified QCI types may be extended to 256 to meet a requirement of service extension in a communication system. In a conventional art, scheduling of access services in a cell mainly includes unified sequencing of all the services and unified resource allocation. However, along with massive extension of terminal services, there must be a larger number of more fine service types in a future communication system. Along with increase of sequenced objects, complexity in unified sequencing is progressively increased by square times, which may cause huge pressure on a processing capability of a base station. Therefore, this unified sequencing algorithm may not be adapted to the requirement of service extension in the future communication system.

The document 3GPP TS 23.203 V13.1.0 "3rd Genernation Partnership Project; Technical Specification Group Services and System Aspects; Policy and charging control architecture (Release 13)", XP50923667, specifies two main functions. One is Flow based charging, including charging control and online credit control, for service data flows and application traffic; and the other is policy control (e.g., gating control, QoS control, QoS signalling, etc.).

### SUMMARY

In view of this, embodiments of the disclosure are intended to provide a service scheduling method and device and a storage medium, which may alleviate pressure of multiple service objects on a processing capability of a base station, ensure service scheduling performance and also maximally achieve adaptability to a requirement of service extension in a future communication system.

To this end, the technical solutions of the embodiments of the disclosure are implemented as follows.

The embodiments of the disclosure provide a service scheduling method implemented by a base station. A service attribute parameter of an access service is acquired. When it is determined that a service group in which the number of services does not reach an upper limit currently exists, the access service is put into a service group according to the acquired service attribute parameter and a preset service grouping rule. Services in each service group are sequentially scheduled by turns according to a grouping result. When it is determined that the service attribute parameter according to which service grouping is currently performed is the service resource type or a QCI type, the service resource type or QCI type of the access service is determined according to the acquired service attribute parameter, and the access service is added into a service group including a smallest number of services with the same service resource type or QCI type as the access service. When it is determined that the service attribute parameter according to which service grouping is currently performed is the PDB, the PER or the ARP, a value of the service attribute parameter according to which service grouping is performed is determined according to the acquired service attribute parameter. The access service is added into a service group including a smallest number of services with values of service attribute parameters the same as the value of the service attribute parameter according to which service grouping is performed. When it is determined that the service attribute parameter according to which service grouping is currently performed includes a first attribute parameter and a second attribute parameter, the first attribute parameter including the GBR and/or the MBR and the second attribute parameter including the PBR and/or the AMBR, and when it is determined that the service resource type of the access service is a GBR type according to the acquired service attribute parameter, the value(s) of the GBR and/or MBR of the access service are/is determined according to the acquired service attribute parameter. The access service is added into a service group with the smallest sum of GBRs of all services, or the access service is added into a service group with the smallest sum of MBRs of all services, or the access service is added into a service group with the smallest sum of GBRs+MBRs of all services.

Alternatively, when it is determined that the service resource type of the access service is a NonGBR type according to the acquired service attribute parameter, the value(s) of the PBR and/or AMBR of the access service are/is determined according to the acquired service attribute parameter, and the access service is added into a service group with the smallest sum of PBRs of all services, or the access service is added into a service group with the smallest sum of AMBRs of all services, or the access service is added into a service group with the smallest sum of PBRs+AMBRs of all services.

When there are two or more than two service attribute parameters according to which service grouping is performed, priorities of the service attribute parameters according to which service grouping is performed are determined, and grouping is performed according to the service attribute parameter with the highest priority.

In the solution, the service attribute parameter may include one or more of a service resource type, a QCI, a PDB, a PER, a Guaranteed Bit Rate (GBR), a Maximum Bit Rate (MBR), an Aggregate Maximum Bit Rate (AMBR), a Priority Bit Rate (PBR) and an Allocation Retention Priority (ARP).

In the solution, the method may further include that when it is determined that the service group in which the number of services does not reach the upper limit does not currently exist, a new service group is created, and the access service is added into the new service group, or access of the access service is denied.

In the solution, the operation that it is determined that the service group in which the number of services does not reach the upper limit currently exists may include that: all service groups are screened, service groups in which the number of services reaches the upper limit in the service groups are removed from a queue to be grouped, and if the queue to be grouped after removal is not empty, the service group in which the number of services does not reach the upper limit exists.

The embodiments of the disclosure further provide a service scheduling device including an acquisition module, a grouping module and a scheduling module.

The acquisition module is arranged to acquire a service attribute parameter of an access service.

The grouping module is arranged to, when it is determined that a service group in which the number of services does not reach an upper limit currently exists, put the access service into a service group according to the acquired service attribute parameter and a preset service grouping rule.

The scheduling module is arranged to sequentially schedule services in each service group by turns according to a grouping result.

The grouping module is further arranged to, when it is determined that the service attribute parameter according to which service grouping is currently performed is the service resource type or a QCI type, determine the service resource type or QCI type of the access service according to the acquired service attribute parameter, and add the access service into a service group including a smallest number of services with the same service resource type or QCI type as the access service. When it is determined that the service attribute parameter according to which service grouping is currently performed is the PDB, the PER or the ARP, the grouping module determines a value of the service attribute parameter according to which service grouping is performed according to the acquired service attribute parameter, and adds the access service into a service group including a smallest number of services with values of service attribute parameters the same as the value of the service attribute parameter according to which service grouping is performed. When it is determined that the service attribute parameter according to which service grouping is currently performed includes a first attribute parameter and a second attribute parameter, the first attribute parameter including the GBR and/or the MBR and the second attribute parameter including the PBR and/or the AMBR, and when it is determined that the service resource type of the access service is a GBR type according to the acquired service attribute parameter, the grouping module determines the value(s) of the GBR and/or MBR of the access service according to the acquired service attribute parameter, and adds the access service into a service group with the smallest sum of GBRs of all services, or adds the access service into a service group with the smallest sum of MBRs of all services, or adds the access service into a service group with the smallest sum of GBRs+MBRs of all services.

Alternatively, when it is determined that the service resource type of the access service is a NonGBR type according to the acquired service attribute parameter, the grouping module determines the value(s) of the PBR and/or AMBR of the access service according to the acquired service attribute parameter, and adds the access service into a service group with the smallest sum of PBRs of all services, or adds the access service into a service group with the smallest sum of AMBRs of all services, or adds the access service into a service group with the smallest sum of PBRs+AMBRs of all services.

When there are two or more than two service attribute parameters according to which service grouping is performed, the grouping module determines priorities of the service attribute parameters according to which service grouping is performed, and performs grouping according to the service attribute parameter with the highest priority.

In the solution, the service attribute parameter may include one or more of a service resource type, a QCI, a PDB, a PER, a GBR, an MBR, an AMBR, a PBR and an ARP.

In the solution, the device may further include a creation module, arranged to, when it is determined that the service group in which the number of services does not reach the upper limit does not currently exist, create a new service group, and add the access service into the new service group, or deny access of the access service.

In the solution, the grouping module may be arranged to screen all the service groups, remove service groups in which the number of services reach the upper limit in the service groups from a queue to be grouped, and if the queue to be grouped after removal is not empty, determine that the service group in which the number of services does not reach the upper limit exists.

The embodiments of the disclosure further provide a computer storage medium storing a computer program. The computer program is arranged to execute the service scheduling method of the embodiments of the disclosure.

According to the service scheduling method and device and the storage medium provided by the embodiments of the disclosure, the service attribute parameter of the access service is acquired. When it is determined that the service group in which the number of services does not reach the upper limit currently exists, the access service is grouped according to the acquired service attribute parameter and the preset service grouping rule. The services in each service group are sequentially scheduled by turns according to the grouping result. Therefore, a scheduling order and timeliness are ensured. Scheduling fairness is also combined. Processing objects of a base station at each scheduling time are reduced and pressure of multiple service objects on a processing capability of the base station is greatly alleviated. Service scheduling performance is ensured. Adaptability to a requirement of service extension in a future communication system is also maximally achieved.

### BRIEF DESCRIPTION OF THE DRAWINGS

Fig. 1 is a flowchart showing a service scheduling method according to Embodiment One of the disclosure.
Fig. 2 is a flowchart showing a service scheduling method according to Embodiment Two of the disclosure.
Fig. 3 is a flowchart showing a service scheduling method according to Embodiment Three of the disclosure.
Fig. 4 is a flowchart showing a service scheduling method according to Embodiment Four of the disclosure.
Fig. 5 is a flowchart showing a service scheduling method according to Embodiment Five of the disclosure.
Fig. 6 is a structure diagram illustrating a service scheduling device according to an embodiment of the disclosure.

### DETAILED DESCRIPTION

In the embodiments of the disclosure, a service attribute parameter of an access service is acquired. When it is determined that a service group in which the number of services does not reach an upper limit currently exists, the access service is grouped according to the acquired service attribute parameter and a preset service grouping rule. Services in each service group are sequentially scheduled by turns according to a grouping result.

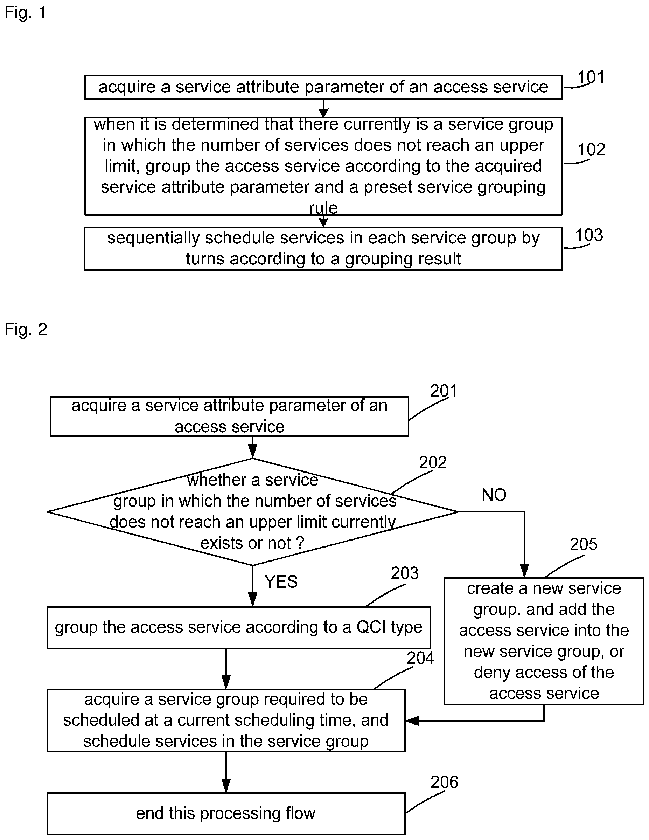

Fig. 1 is a flowchart showing a service scheduling method according to Embodiment One of the disclosure. As shown in Fig. 1, a flow of the service scheduling method of the embodiment includes the following steps.

At Step 101, a service attribute parameter of an access service is acquired.

Herein, the step that the service attribute parameter of the access service is acquired is that a base station acquires a service attribute parameter of a terminal access service in a serving cell.

The service attribute parameter includes one or more of a service resource type, a QCI, a PDB, a PER, a GBR, an MBR, an AMBR, a PBR and an ARP.

The service resource type, the QCI, the PDB and the PER may be acquired through a QCI index searching 3GPP protocol.

The GBR, the MBR, the AMBR and the ARP may be acquired through interaction between the base station and a core network after establishment of the terminal service.

The PBR may be acquired by searching for configuration information of the base station.

In an embodiment, the service resource type includes a GBR type and a NonGBR type.

At Step 102, when it is determined that a service group in which the number of services does not reach an upper limit currently exists, the access service is grouped according to the acquired service attribute parameter and a preset service grouping rule.

Here, the upper limit of the number of services included in a service group may be preset according to a processing capability of the base station and practical conditions.

The operation that it is determined that the service group in which the number of services does not reach the upper limit currently exists includes that all service groups are screened, service groups in which the number of services reaches the upper limit are removed from a queue to be grouped, and if the queue to be grouped after removal is not empty, a service group in which the number of services does not reach the upper limit exists. The queue to be grouped initially includes all the service groups. For example, there are totally 5 service groups, i.e. a service group 1, a service group 2, a service group 3, a service group 4, a service group 5 respectively, and the queue to be grouped initially includes the 5 service groups.

In an embodiment, the step that the access service is grouped according to the acquired service attribute parameter and the preset service grouping rule includes that when it is determined that the service attribute parameter according to which service grouping is currently performed is the service resource type or a QCI type, the service resource type or QCI type of the access service is determined according to the acquired service attribute parameter, and the access service is added into a service group including a smallest number of services with the same service resource type or QCI type with the access service. For example, the service resource type of the service is determined to be the GBR type according to the acquired service attribute parameter, and the service is added into a service group including a smallest number of services of the GBR type. Performing grouping according to the service resource type or the QCI type ensures that the number of services in different service groups is kept substantially consistent.

When there are two or more than two service groups including the smallest number of services with service resource type or QCI type the same as the access service, one of service groups is randomly selected as a home group of the access service and the access service is added into the home group.

When it is determined that the service attribute parameter according to which service grouping is currently performed is the PDB, the PER or the ARP, a value of the service attribute parameter according to which service grouping is performed is determined according to the acquired service attribute parameter, and the access service is added into a service group including a smallest number of services of which values of service attribute parameters are the same as the value of the service attribute parameter according to which service grouping is performed. For example, when the service attribute parameter according to which service grouping is currently performed is the PER, a value of the PER of the access service is determined to be 10⁻² according to the acquired service attribute parameter, and the access service is added into a service group with a smallest number of services of which values of PERs are 10⁻².

When there are two or more than two service groups including the smallest number of services of which values of PERs are the same as the value of the service attribute parameter according to which service grouping is performed, one of service groups is randomly selected as a home group of the access service, and the access service is added into the home group.

Herein, performing grouping according to the PDB or the PER ensures that numbers of services with different PDB and PER requirements between different service groups are substantially consistent. Performing grouping according to the ARP ensures that the number of services with the same ARP level between different service groups is substantially consistent. Performing grouping according to the ARP also ensures that distribution of gold, silver and copper users between different service groups are substantially consistent because gold, silver and copper attributes of users are usually distinguished by virtue of ARPs of services. At present, the 3GPP protocol specifies totally 4 PDBs, i.e. 50ms, 100ms, 150ms and 300ms respectively, and totally 3 PERs, i.e. 10⁻², 10⁻³ and 10⁻⁶ respectively.

It is determined that the service attribute parameter according to which service grouping is currently performed includes a first attribute parameter and a second attribute parameter, the first attribute parameter including the GBR and/or the MBR and the second attribute parameter including the PBR and/or the AMBR, and when it is determined that the service resource type of the access service is a GBR type according to the acquired service attribute parameter, the value(s) of the GBR and/or MBR of the access service are/is determined according to the acquired service attribute parameter, and the access service is added into a service group in which a sum of GBRs of all services is smallest, or the access service is added into a service group in which a sum of MBRs of all services is smallest, or the access service is added into a service group in which a sum of GBRs+MBRs of all services is smallest.

Alternatively, when it is determined that the service resource type of the access service is a NonGBR type according to the acquired service attribute parameter, the value(s) of the PBR and/or AMBR of the access service are/is determined according to the acquired service attribute parameter, and the access service is added into a service group in which a sum of PBRs of all services is smallest, or the access service is added into a service group in which a sum of AMBRs of all services is smallest, or the access service is added into a service group in which a sum of PBRs+AMBRs of all services is smallest.

When there are two or more than two service groups in which sums of GBRs of all services are smallest, or service groups in which sums of MBRs of all services are smallest, or service groups in which sums of GBRs+MBRs of all services are smallest, one of service groups is randomly selected as a home group of the access service, and the access service is added into the home group. When there are two or more than two service groups in which sums of PBRs of all services are smallest, or service groups in which sums of AMBRs of all services are smallest, or service groups in which sums of PBRs+AMBRs of all services are smallest, one of service groups is randomly selected as a home group of the access service, and the access service is added into the home group.

For example, a GBR access service with a QCI=1, GBR=MBR=15kbps, is grouped according to the GBR, and the access service is added into a service group in which a sum of GBRs are smallest. A GBR access service with a QCI=1, GBR=MBR=15kbps, is grouped according to the GBR and the MBR. A sum of GBRs+MBRs of all services in each service group is calculated, and the access service is added into the service group in which the sum of the GBRs+MBRs is smallest.

When there are two or more than two service attribute parameters according to which service grouping is performed, priorities of the service attribute parameters according to which service grouping is performed are determined, and grouping is performed according to the service attribute parameter with the highest priority. For example, service attribute parameters according to which service grouping is performed are the service resource type and the ARP. If a maximum difference value of numbers of services with the same ARP between different service groups is within a certain range, grouping is preferably performed according to the service resource type. Otherwise, grouping is preferably performed according to the ARP. Herein, a range of the maximum difference value of the numbers of the services with the same ARP between different service groups may be set according to a practical condition.

Herein, ensuring QoS of a base station side is mainly embodied by ensuring GBR of a GBR service. In the abovementioned grouping manners, the manners for performing grouping according to the service resource type and the GBR and/or the MBR all consider ensuring the GBR service and thus substantially ensure that the number of GBR service between different service groups or the rate sums between different service groups is consistent. However, the manners for performing grouping according to the PDB, the PER, the ARP and the like do not consider balance between GBR services. Therefore, in an embodiment, the manners for performing grouping according to the PDB, the PER, the ARP and the like may be combined with the manners for performing grouping according to the service resource type and the GBR and/or the MBR. At least two service attribute parameters may be determined for service grouping. Therefore, service attribute balance is ensured, and meanwhile, GBRs of GBR services between different service groups are also ensured.

In an embodiment, when it is determined that the service group in which the number of services does not reach the upper limit does not currently exist, a new service group is created, and the access service is added into the new service group, or access of the access service is denied. When the base station still has a storage space and the processing capability of the base station is sufficient, the new service group is created, otherwise access of the terminal service is denied.

At Step 103, services in each service group are sequentially scheduled by turns according to a grouping result.

Here, after service grouping is completed, the services in only one service group are scheduled in each scheduling opportunity of the base station, and the scheduling opportunities are obtained by turns by different service groups. That is, at a current scheduling time, the base station only schedules the services in the service group currently required to be scheduled and then sequentially schedules the services in the other service groups, thereby scheduling the services in different service groups by turns.

The step that the services in each service group are scheduled includes that sequencing and resource allocation are performed on the services in each service group according to a scheduling algorithm.

Fig. 2 is a flowchart showing a service scheduling method according to Embodiment Two of the disclosure. As shown in Fig. 2, the service scheduling method of Embodiment Two of the disclosure includes the following steps.

At Step 201, a service attribute parameter of an access service is acquired.

In the embodiment of the disclosure, acquired service attribute parameters of a service established during access of User Equipment (UE) with a UE Index=10 include QCI=5, ARP=1 and AMBR=5Mbps.

At Step 202, it is determined whether a service group in which the number of services does not reach an upper limit currently exists or not, Step 203 is executed if YES, and Step 205 is executed if NO.

The step includes that all service groups are screened, service groups in which the number of services reaches the upper limit in the service groups are removed, and if a queue to be grouped after removal is not empty, the service group in which the number of services does not reach the upper limit exists; and if the queue to be grouped after removal is empty, the service group in which the number of services does not reach the upper limit does not exist. The queue to be grouped initially includes all the service groups.

Here, the upper limit of the number of services included in a service group is preset according to a processing capability of a base station and practical conditions. In the embodiment of the disclosure, the upper limit of the number of services included in each service group is 100.

At Step 203, the access service is grouped according to a QCI type.

The step includes that it is determined that a UE access service is QCI=5 according to the acquired service attribute parameter, all the service groups are compared to determine a service group including a smallest number of services with QCI=5, it is determined whether there is only one service group including the smallest number of services with QCI=5 or not, and if multiple service groups including the smallest number of services with QCI=5 exist, one is randomly selected as a home group of the current access service, and the UE access service is added; and if only one service group including the smallest number of services with QCI=5 exists, the UE access service is directly added into the service group.

In the embodiment of the disclosure, all the service groups are compared to obtain that the service groups including the smallest number of services with QCI=5 include a service group 2 and a service group 3, of which both include 10. One of the service groups is randomly selected for addition. In the embodiment, the UE access service is added into the group 2.

At Step 204, a service group required to be scheduled at a current scheduling time is acquired, and services in the service group are scheduled.

In the embodiment of the disclosure, the service group required to be scheduled at the current scheduling time is the service group 2.

The operation that the services in each service group are scheduled includes that sequencing and resource allocation are performed on the services in each service group according to a scheduling algorithm.

At Step 205, a new service group is created, and the access service is added into the new service group, or access of the access service is denied, and then Step 204 is executed.

Here, when the base station still has a storage space and the processing capability of the base station is sufficient, the new service group is created. Otherwise, access of the terminal service is denied.

At Step 206, this processing flow is ended.

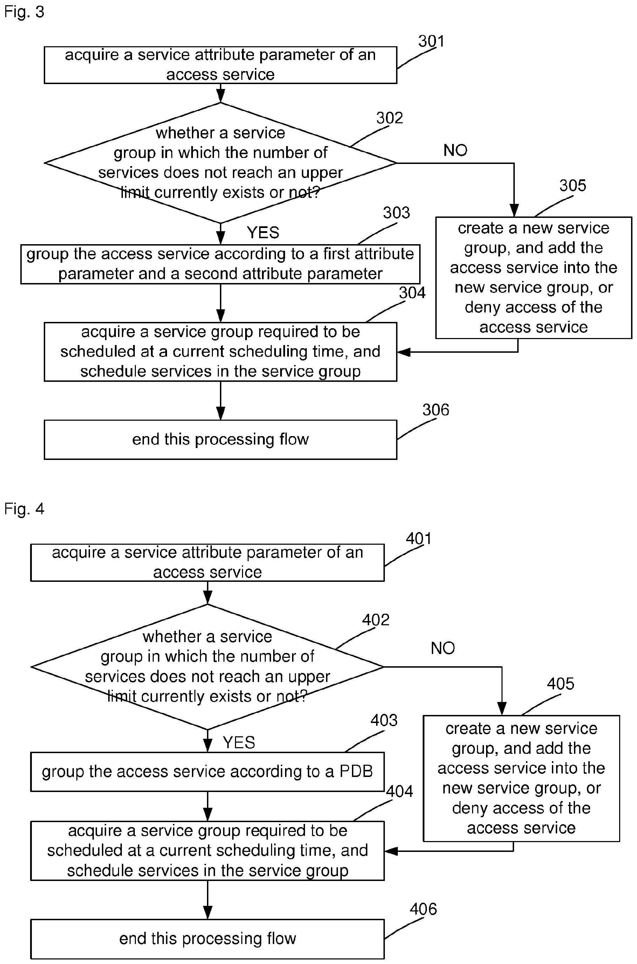

Fig. 3 is a flowchart showing a service scheduling method according to Embodiment Three of the disclosure. As shown in Fig. 3, the service scheduling method of Embodiment Three of the disclosure includes the following steps.

At Step 301, a service attribute parameter of an access service is acquired.

In the embodiment of the disclosure, acquired service attribute parameters of a service established during access of UE with a UE Index=10 include QCI=2, ARP=1 and GBR=MBR=1 Mbps.

At Step 302, it is determined whether a service group in which the number of services does not reach an upper limit currently exists or not, Step 303 is executed if YES, and Step 305 is executed if NO.

The step includes that all service groups are screened, service groups in which the number of services reaches the upper limit in the service groups are removed, and if a queue to be grouped after removal is not empty, the service group in which the number of services does not reach the upper limit exists. If the queue to be grouped after removal is empty, the service group in which the number of services does not reach the upper limit does not exist. The queue to be grouped initially includes all the service groups.

Here, the upper limit of the number of services included in a service group is preset according to a processing capability of the base station and practical conditions. In the embodiment of the disclosure, the upper limit of the number of services included in each service group is 100.

At Step 303, the access service is grouped according to a first attribute parameter and a second attribute parameter.

Here, the first attribute parameter is a GBR and the second attribute parameter is a PBR.

The step includes that the GBR=MBR=1 Mbps of the access service is obtained according to the acquired service attribute parameter, so that the service is determined to be a GBR service, and the access service is added into a service group in which a sum of GBRs of all services is smallest. In the embodiment of the disclosure, the service group in which the sum of the GBRs of all the services is determined to be a service group 2, so that the access service is added into the service group 2.

At Step 304, a service group required to be scheduled at a current scheduling time is acquired, and services in the service group are scheduled.

In the embodiment of the disclosure, the service group required to be scheduled at the current scheduling time is the service group 2.

The operation that the services in each service group are scheduled includes that sequencing and resource allocation are performed on the services in each service group according to a scheduling algorithm.

At Step 305, a new service group is created, and the access service is added into the new service group, or access of the access service is denied, and then Step 304 is executed.

Here, when the base station still has a storage space and the processing capability of the base station is sufficient, the new service group is created. Otherwise, access of the terminal service is denied.

At Step 306, this processing flow is ended.

Fig. 4 is a flowchart showing a service scheduling method according to Embodiment Four of the disclosure. As shown in Fig. 4, the service scheduling method of Embodiment Four of the disclosure includes the following steps.

At Step 401, a service attribute parameter of an access service is acquired.

In the embodiment of the disclosure, acquired service attribute parameters of a service established during access of UE with a UE Index=10 include QCI=2, ARP=1, GBR=MBR=1Mbps and a PDB of 150ms.

At Step 402, it is determined whether a service group in which the number of services does not reach an upper limit currently exists or not, Step 403 is executed if YES, and Step 405 is executed if NO.

The step includes that: all service groups are screened, service groups in which the number of services reaches the upper limit are removed, and if a queue to be grouped after removal is not empty, the service group in which the number of services does not reach the upper limit exists. If the queue to be grouped after removal is empty, the service group in which the number of services does not reach the upper limit does not exist. The queue to be grouped initially includes all the service groups.

Here, the upper limit of the number of services included in a service group is preset according to a processing capability of the base station and practical conditions. In the embodiment of the disclosure, the upper limit of the number of services included in each service group is 100.

At Step 403, the access service is grouped according to a PDB.

The step includes that it is determined that the PDB of the access service is 150ms according to the acquired service attribute parameter, all the service groups are compared to determine a service group including a smallest number of services with the PDB of 150ms. The service group including the smallest number of services with the PDB of 150ms is a service group 3 in the embodiment of the disclosure, and the access service is added into the service group 3.

At Step 404, a service group required to be scheduled at a current scheduling time is acquired, and services in the service group are scheduled.

In the embodiment of the disclosure, the service group required to be scheduled at the current scheduling time is a service group 2.

The operation that the services in each service group are scheduled includes that sequencing and resource allocation are performed on the services in each service group according to a scheduling algorithm.

At Step 405, a new service group is created, and the access service is added into the new service group, or access of the access service is denied, and then Step 404 is executed.

Here, when the base station still has a storage space and the processing capability of the base station is sufficient, the new service group is created. Otherwise, access of the terminal service is denied.

At Step 406, this processing flow is ended.

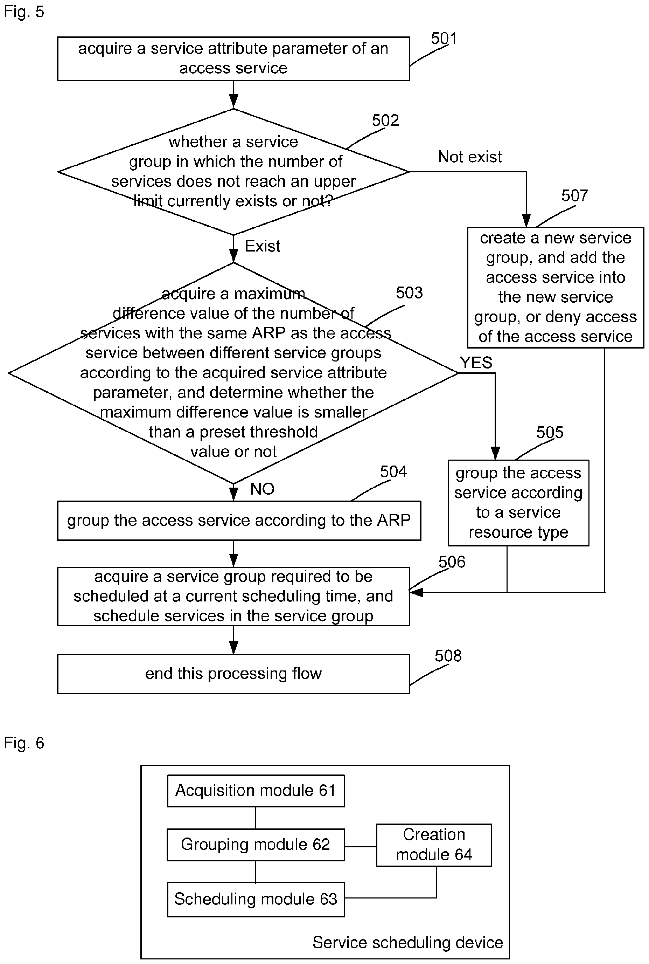

Fig. 5 is a flowchart showing a service scheduling method according to Embodiment Five of the disclosure. As shown in Fig. 5, the service scheduling method of Embodiment Five of the disclosure includes the following steps.

At Step 501, a service attribute parameter of an access service is acquired.

In the embodiment of the disclosure, acquired service attribute parameters of a service established during access of UE with a UE Index=10 include QCI=2, ARP=1 and GBR=MBR=1 Mbps.

At Step 502, it is determined whether a service group in which the number of services does not reach an upper limit currently exists or not, Step 503 is executed if YES, and Step 507 is executed if NO.

The step includes that all service groups are screened, service groups in which the number of services reaches the upper limit in the service groups are removed, and if a queue to be grouped after removal is not empty, the service group in which the number of services does not reach the upper limit exists. If the queue to be grouped after removal is empty, the service group in which the number of services does not reach the upper limit does not exist. The queue to be grouped initially includes all the service groups.

Here, the upper limit of the number of services included in a service group is preset according to a processing capability of the base station and practical conditions. In the embodiment of the disclosure, the upper limit of the number of services included in each service group is 100.

At Step 503, a maximum difference value of numbers of services with the same ARP as the access service between different service groups is acquired according to the acquired service attribute parameter, it is determined whether the maximum difference value is smaller than a preset threshold value or not, Step 505 is executed if it is smaller than the preset threshold value, otherwise Step 504 is executed.

In the embodiment of the disclosure, the ARP=1 of the access service may be obtained according to the acquired service attribute parameter, so that the maximum difference value of the number of the services with the same ARP as the access service between different service groups is acquired according to the acquired service attribute parameter. Specifically, a service group including a smallest number of services with the ARP=1 and service group including a largest number of services with the ARP=1 in the service groups are acquired, and the maximum difference value of the number of the services with the ARP=1 between different service groups is determined. In the embodiment, the service group including the smallest number of services with the ARP=1 is a service group, and includes 5 services with the ARP=1, and the service group including the largest number of services with the ARP=1 is a service group 1, and includes 20 services with the ARP=1, so that the maximum difference value of the number of the services with the ARP=1 between different service groups is 15.

The preset threshold value is 10, and may be set according to the practical condition.

At Step 504, the access service is grouped according to the ARP.

The step includes that: the ARP=1 of the access service is determined according to the acquired service attribute parameter, the access service is added into the service group including the smallest number of services with the ARP=1 in all the service groups, and if multiple service groups including the smallest number of services with the ARP=1 exist, one is randomly selected as a home group of the current access service, and the access service is added. If only one service group including the smallest number of services with the ARP=1 exists, the access service is directly added into the service group.

In the embodiment of the disclosure, the access service is grouped according to a service resource type and the ARP. When the maximum difference value of the number of the services with the same ARP as the access service between different service groups is larger than the preset threshold value, and is namely not within a specified range, the access service is preferably grouped according to the ARP. When the maximum difference value of the number of the services with the same ARP as the access service between different service groups is within the specified range, and is namely smaller than the preset threshold value, the access service is preferably grouped according to the service resource type.

At Step 505, the access service is grouped according to a service resource type, and Step 506 is executed.

The step includes that: it is determined that the service resource type of the access service is a GBR type according to the acquired service attribute parameter, the access is added into a service group including a smallest number of services of the GBR type. It is determined whether there is only one service group including the smallest number of services of the GBR type or not. If multiple service groups including the smallest number of services of the GBR type exist, one is randomly selected as a home group of the current access service, and the access service is added into the home group. If only one service group including the smallest number of services of the GBR type exists, the access service is directly added into the service group.

At Step 506, a service group required to be scheduled at a current scheduling time is acquired, services in the service group are scheduled, and Step 508 is executed.

In the embodiment of the disclosure, the service group required to be scheduled at the current scheduling time is a service group 2.

The operation that the services in each service group are scheduled includes that sequencing and resource allocation are performed on the services in each service group according to a scheduling algorithm.

At Step 507, a new service group is created, and the access service is added into the new service group, or access of the access service is denied, and then Step 506 is executed.

Here, when the base station still has a storage space and the processing capability of the base station is sufficient, the new service group is created. Otherwise, access of the terminal service is denied.

At Step 508, this processing flow is ended.

Fig. 6 is a structure diagram illustrating a service scheduling device according to an embodiment of the disclosure. As shown in Fig. 6, the service scheduling device of the embodiment of the disclosure includes an acquisition module 61, a grouping module 62 and a scheduling module 63.

The acquisition module 61 is arranged to acquire a service attribute parameter of an access service.

The grouping module 62 is arranged to, when it is determined that a service group in which the number of services does not reach an upper limit currently exists, group the access service according to the acquired service attribute parameter and a preset service grouping rule.

The scheduling module 63 is arranged to sequentially schedule services in each service group by turns according to a grouping result.

Here, the service attribute parameter includes one or more of a service resource type, a QCI, a PDB, a PER, a GBR, an MBR, an AMBR, a PBR and an ARP.

The operation that the acquisition module 61 acquires the service attribute parameter of the access service includes that the acquisition module 61 acquires the service resource type, the QCI, the PDB and the PER through a QCI index searching 3GPP protocol, acquires the GBR, the MBR, the AMBR and the ARP by interaction with a core network, and acquires the PBR by searching for configuration information of a base station.

In an embodiment, the operation that the grouping module 62 determines that the service group in which the number of services does not reach the upper limit currently exists includes that: the grouping module 62 screens all the service groups, removes service groups in which the number of services reaches the upper limit in the service groups from a queue to be grouped. If the queue to be grouped after removal is not empty, the grouping module 62 determines that the service group in which the number of services does not reach the upper limit exists.

In an embodiment, the device further includes a creation module 64, arranged to, when it is determined that the service group in which the number of services does not reach the upper limit does not currently exist, create a new service group, and add the access service into the new service group, or deny access of the access service.

In an embodiment, the operation that the grouping module 62 groups the access service according to the acquired service attribute parameter and the preset service grouping rule includes that: the grouping module 62, when it is determined that the service attribute parameter according to which service grouping is currently performed is the service resource type or a QCI type, determines the service resource type or QCI type of the access service according to the acquired service attribute parameter, and adds the access service into a service group including a smallest number of services with the same service resource type or QCI type with the access service.

When it is determined that the service attribute parameter according to which service grouping is currently performed is the PDB, the PER or the ARP, the grouping module 62 determines a value of the service attribute parameter according to which service grouping is performed according to the acquired service attribute parameter, and adds the access service into a service group including a smallest number of services of which values of service attribute parameters are the same as the value of the service attribute parameter according to which service grouping is performed.

The grouping module 62 determines that the service attribute parameter according to which service grouping is currently performed includes a first attribute parameter and a second attribute parameter, the first attribute parameter including the GBR and/or the MBR and the second attribute parameter including the PBR and/or the AMBR. When it is determined that the service resource type of the access service is a GBR type according to the acquired service attribute parameter, the grouping module 62 determines the value(s) of the GBR and/or MBR of the access service according to the acquired service attribute parameter, and adds the access service into a service group in which a sum of GBRs of all services is smallest, or adds the access service into a service group in which a sum of MBRs of all services is smallest, or adds the access service into a service group in which a sum of GBRs+MBRs of all services is smallest.

Alternatively, when it is determined that the service resource type of the access service is a NonGBR type according to the acquired service attribute parameter, the grouping module 62 determines the value(s) of the PBR and/or AMBR of the access service according to the acquired service attribute parameter, and adds the access service into a service group in which a sum of PBRs of all services is smallest, or adds the access service into a service group in which a sum of AMBRs of all services is smallest, or adds the access service into a service group in which a sum of PBRs+AMBRs of all services is smallest.

When there are two or more than two service attribute parameters according to which service grouping is performed, the grouping module 62 determines priorities of the service attribute parameters according to which service grouping is performed, and performs grouping according to the service attribute parameter with the highest priority.

In an embodiment, the operation that the scheduling module 63 schedules the services in each service group includes that the scheduling module 63 performs sequencing and resource allocation on the services in each service group according to a scheduling algorithm.

The acquisition module, grouping module, scheduling module and creation module in the service scheduling device disclosed in the embodiment of the disclosure may all be implemented by a processor, and of course, may also be implemented by a specific logical circuit. The processor may be a processor on a mobile terminal or a server. In practice, the processor may be a Central Processing Unit (CPU), a Micro Processing Unit (MPU), a Digital Signal Processor (DSP), a Field-Programmable Gate Array (FPGA) or the like.

In the embodiment of the disclosure, if being implemented in form of software function module and sold or used as an independent product, the service scheduling method may also be stored in a computer-readable storage medium. Based on this understanding, the technical solutions of the embodiments of the disclosure substantially or parts making contributions to a conventional art may be embodied in form of software product, and the computer software product is stored in a storage medium, including a plurality of instructions arranged to enable a piece of computer equipment (which may be a personal computer, a server, network equipment or the like) to execute all or part of the method in each embodiment of the disclosure. The abovementioned storage medium includes various media capable of storing program codes such as a U disk, a mobile hard disk, a Read-Only Memory (ROM), a magnetic disk or an optical disk. Therefore, the embodiments of the disclosure are not limited to any specific hardware and software combination.

Accordingly, the embodiments of the disclosure further provide a computer storage medium having a computer program stored thereon, the computer program being arranged to execute the service scheduling method according to the embodiments of the disclosure.

The above is only the preferred embodiments of the disclosure and not intended to limit the scope of protection of the disclosure.

## Claims

1. A service scheduling method implemented by a base station, comprising:
acquiring (101) a service attribute parameter of an access service;
putting the access service into a service group according to the acquired service attribute parameter and a preset service grouping rule when it is determined that there currently is a service group in which the number of services does not reach an upper limit (102); and
sequentially scheduling services in each service group by turns according to a grouping result (103),
wherein the putting the access services into the service group according to the acquired service attribute parameter and the preset service grouping rule (102) comprises:
when it is determined that the service attribute parameter according to which service grouping is currently performed is a service resource type or a QCI type, determining (203) the service resource type or QCI type of the access service according to the acquired service attribute parameter, and adding the access service into a service group comprising a smallest number of services with the same service resource type or QCI type as the access service;
when it is determined that the service attribute parameter according to which service grouping is currently performed is a PDB, a PER or an ARP, determining (403) a value of the service attribute parameter according to which service grouping is performed according to the acquired service attribute parameter, and adding the access service into a service group comprising a smallest number of services with values of service attribute parameters the same as the value of the service attribute parameter according to which service grouping is performed;
when it is determined that the service attribute parameter according to which service grouping is currently performed comprises a first attribute parameter and a second attribute parameter, the first attribute parameter comprising a GBR and/or an MBR and the second attribute parameter comprising a PBR and/or an AMBR, and when it is determined that the service resource type of the access service is a GBR type according to the acquired service attribute parameter, determining (303) value(s) of the GBR and/or MBR of the access service according to the acquired service attribute parameter, and adding the access service into a service group with the smallest sum of GBRs of all services, or adding the access service into a service group with the smallest sum of MBRs of all services, or adding the access service into a service group with the smallest sum of GBRs+MBRs of all services; or,
when it is determined that the service resource type of the access service is a NonGBR type according to the acquired service attribute parameter, determining value(s) of the PBR and/or AMBR of the access service according to the acquired service attribute parameter, and adding the access service into a service group with the smallest sum of PBRs of all services, or adding the access service into a service group with the smallest sum of AMBRs of all services, or adding the access service into a service group with the smallest sum of PBRs+AMBRs of all services; and
when there are two or more than two service attribute parameters according to which service grouping is performed, determining priorities of the service attribute parameters according to which service grouping is performed, and performing grouping according to the service attribute parameter with the highest priority.

2. The method according to claim 1, wherein the service attribute parameter comprises: one or more of a service resource type, a Quality of Service, QoS, Class Identifier, QCI, a Packet Delay Budget, PDB, a Packet Error Loss Rate, PER, a Guaranteed Bit Rate, GBR, a Maximum Bit Rate, MBR, an Aggregate Maximum Bit Rate, AMBR, a Priority Bit Rate, PBR, and an Allocation Retention Priority, ARP.

3. The method according to claim 1 or 2, further comprising:
creating a new service group, and adding the access service into the new service group, or denying access of the access service when it is determined that there is currently no any service group in which the number of services does not reach the upper limit (205, 305, 405, 507).

4. The method according to claim 1 or 2, wherein determining that there currently is the service group in which the number of services does not reach the upper limit comprises:
screening all service groups, removing service groups in which the number of services reaches the upper limit in all the service groups from a queue to be grouped, and if the queue to be grouped after removal is not empty, determining that there is the service group in which the number of services does not reach the upper limit.

5. A service scheduling device, comprising: an acquisition module (61), a grouping module (62) and a scheduling module (63), wherein
the acquisition module (61) is arranged to acquire a service attribute parameter of an access service;
the grouping module (62) is arranged to, when it is determined that there currently is a service group in which the number of services does not reach an upper limit, put the access service into a service group according to the acquired service attribute parameter and a preset service grouping rule; and
the scheduling module (63) is arranged to sequentially schedule services in each service group by turns according to a grouping result, wherein the grouping module (62) is further arranged to,
when it is determined that the service attribute parameter according to which service grouping is currently performed is a service resource type or a QCI type, determine the service resource type or QCI type of the access service according to the acquired service attribute parameter, and add the access service into a service group comprising a smallest number of services with the same service resource type or QCI type as the access service;
when it is determined that the service attribute parameter according to which service grouping is currently performed is a PDB, a PER or an ARP, determine a value of the service attribute parameter according to which service grouping is performed according to the acquired service attribute parameter, and add the access service into a service group comprising a smallest number of services with values of service attribute parameters the same as the value of the service attribute parameter according to which service grouping is performed;
when it is determined that the service attribute parameter according to which service grouping is currently performed comprises a first attribute parameter and a second attribute parameter, the first attribute parameter comprising a GBR and/or an MBR and the second attribute parameter comprising a PBR and/or an AMBR, and when it is determined that the service resource type of the access service is a GBR type according to the acquired service attribute parameter, determine value(s) of the GBR and/or MBR of the access service according to the acquired service attribute parameter, and add the access service into a service group with the smallest sum of GBRs of all services, or add the access service into a service group with the smallest sum of MBRs of all services, or add the access service into a service group with the smallest sum of GBRs+MBRs of all services; or,
when it is determined that the service resource type of the access service is a NonGBR type according to the acquired service attribute parameter, determine value(s) of the PBR and/or AMBR of the access service according to the acquired service attribute parameter, and add the access service into a service group with the smallest sum of PBRs of all services, or add the access service into a service group with the smallest sum of AMBRs of all services, or add the access service into a service group with the smallest sum of PBRs+AMBRs of all services; and
when there are two or more than two service attribute parameters according to which service grouping is performed, determine priorities of the service attribute parameters according to which service grouping is performed, and perform grouping according to the service attribute parameter with the highest priority.

6. The device according to claim 5, wherein the service attribute parameter comprises: one or more of a service resource type, a Quality of Service, QoS, Class Identifier, QCI, a Packet Delay Budget, PDB, a Packet Error Loss Rate, PER, a Guaranteed Bit Rate, GBR, a Maximum Bit Rate, MBR, an Aggregate Maximum Bit Rate, AMBR, a Priority Bit Rate, PBR, and an Allocation Retention Priority, ARP.

7. The device according to claim 5 or 6, further comprising: a creation module (64), arranged to, when it is determined that there currently is no any service group in which the number of services does not reach the upper limit, create a new service group, and add the access service into the new service group, or deny access of the access service.

8. The device according to claim 5 or 6, wherein the grouping module (62) is arranged to screen all service groups, remove service groups in which the number of services reaches the upper limit in the service groups from a queue to be grouped, and determine that there is the service group in which the number of services does not reach the upper limit in the case that the queue to be grouped after removal is not empty.

9. A computer storage medium having computer-executable instructions stored therein, the computer-executable instructions being arranged to execute the service scheduling method according to any one of claims 1-4.

## Patentansprüche

1. Dienstplanungsverfahren, das von einer Basisstation implementiert wird, umfassend:
Erfassen (101) eines Dienstattributparameters eines Zugangsdienstes,
Setzen des Zugangsdienstes in eine Dienstgruppe gemäß dem erfassten Dienstattributparameter und einer voreingestellten Dienstgruppierungsregel, wenn bestimmt wird, dass aktuell eine Dienstgruppe vorhanden ist, in der die Anzahl von Diensten eine Obergrenze nicht erreicht (102), und
sequenzielles Planen von Diensten in jeder Dienstgruppe der Reihe nach gemäß einem Gruppierungsergebnis (103),
wobei das Setzen der Zugangsdienste in die Dienstgruppe gemäß dem erfassten Dienstattributparameter und der voreingestellten Dienstgruppierungsregel (102) Folgendes umfasst:
wenn bestimmt wird, dass der Dienstattributparameter, gemäß dem aktuell die Dienstgruppierung durchgeführt wird, ein Dienstressourcetyp oder ein QCI-Typ ist, Bestimmen (203) des Dienstressourcetyps oder des QCI-Typs des Zugangsdienstes gemäß dem erfassten Dienstattributparameter und Hinzufügen des Zugangsdienstes zu einer Dienstgruppe, die eine kleinste Anzahl von Diensten mit demselben Dienstressourcetyp oder QCI-Typ wie der Zugangsdienst umfasst,
wenn bestimmt wird, dass der Dienstattributparameter, gemäß dem aktuell die Dienstgruppierung durchgeführt wird, ein PDB, eine PER oder eine ARP ist, Bestimmen (403) eines Wertes des Dienstattributparameters, gemäß dem die Dienstgruppierung durchgeführt wird, gemäß dem erfassten Dienstattributparameter und Hinzufügen des Zugangsdienstes zu einer Dienstgruppe, die eine kleinste Anzahl von Diensten mit denselben Werten von Dienstattributparametern wie der Wert des Dienstattributparameters umfasst, gemäß dem die Dienstgruppierung durchgeführt wird,
wenn bestimmt wird, dass der Dienstattributparameter, gemäß dem aktuell die Dienstgruppierung durchgeführt wird, einen ersten Attributparameter und einen zweiten Attributparameter umfasst, wobei der erste Attributparameter eine GBR und/oder eine MBR umfasst und der zweite Attributparameter eine PBR und/oder eine AMBR umfasst, und wenn bestimmt wird, dass der Dienstressourcetyp des Zugangsdienstes gemäß dem erfassten Dienstattributparameter eine GBR ist, Bestimmen (303) eines Wertes / von Werten der GBR und/oder MBR des Zugangsdienstes gemäß dem erfassten Dienstattributparameter und Hinzufügen des Zugangsdienstes zu einer Dienstgruppe mit der kleinsten Summe von GBRs von allen Diensten oder Hinzufügen des Zugangsdienstes zu einer Dienstgruppe mit der kleinsten Summe von MBRs von allen Diensten oder Hinzufügen des Zugangsdienstes zu einer Dienstgruppe mit der kleinsten Summe von GBRs+MBRs von allen Diensten, oder
wenn bestimmt wird, dass der Dienstressourcetyp des Zugangsdienstes gemäß dem erfassten Dienstattributparameter ein NICHT-GBR-Typ ist, Bestimmen eines Wertes / von Werten der PBR und/oder AMBR des Zugangsdienstes gemäß dem erfassten Dienstattributparameter und Hinzufügen des Zugangsdienstes zu einer Dienstgruppe mit der kleinsten Summe von PBRs von allen Diensten oder Hinzufügen des Zugangsdienstes zu einer Dienstgruppe mit der kleinsten Summe von AMBRs von allen Diensten oder Hinzufügen des Zugangsdienstes zu einer Dienstgruppe mit der kleinsten Summe von GBRs+MBRs von allen Diensten, und
wenn zwei oder mehr als zwei Dienstattributparameter vorhanden sind, gemäß denen die Dienstgruppierung durchgeführt wird, Bestimmen von Prioritäten der Dienstattributparameter, gemäß denen die Dienstgruppierung durchgeführt wird, und Durchführen der Gruppierung gemäß dem Dienstattributparameter mit der höchsten Priorität.

2. Verfahren nach Anspruch 1, wobei der Dienstattributparameter Folgendes umfasst: eines oder mehreres von einem Dienstressourcetyp, einer Dienstgüte-(Quality of Service, QoS)Klassekennung (QCI), einem Paketlaufzeitbudget (Packet Delay Budget, PDB), einer Paketfehlerverlustrate (PER), einer garantierten Bitrate (Guaranteed Bit Rate, GBR), einer maximalen Bitrate (Maximum Bit Rate, MBR), einer aggregierten maximalen Bitrate (Aggregate Maximum Bit Rate, AMBR), einer Prioritätsbitrate (Priority Bit Rate, PBR) und einer Zuweisungs-/Erhaltungspriorität (Allocation Retention Priority, ARP).

3. Verfahren nach Anspruch 1 oder 2, ferner umfassend:
Erstellen einer neuen Dienstgruppe und Hinzufügen des Zugangsdienstes zu der neuen Dienstgruppe oder Verweigern des Zugangs des Zugangsdienstes, wenn bestimmt wird, dass aktuell keine Dienstgruppe vorhanden ist, in der die Anzahl von Diensten nicht die Obergrenze erreicht (205, 305, 405, 507).

4. Verfahren nach Anspruch 1 oder 2, wobei das Bestimmen, dass aktuell die Dienstgruppe vorhanden ist, in der die Anzahl von Diensten nicht die Obergrenze erreicht, Folgendes umfasst:
Überprüfen aller Dienstgruppen, Entfernen von Dienstgruppen, in denen die Anzahl von Diensten die Obergrenze in allen Dienstgruppen erreicht, aus einer zu gruppierenden Wartschlange, und wenn die zu gruppierende Warteschlange nach dem Entfernen nicht leer ist, bestimmen, dass eine Dienstgruppe vorhanden ist, in der die Anzahl von Diensten nicht die Obergrenze erreicht.

5. Dienstplanungsvorrichtung, umfassend: ein Erfassungsmodul (61), ein Gruppierungsmodul (62) und ein Planungsmodul (63), wobei
das Erfassungsmodul (61) dafür angeordnet ist, einen Dienstattributparameter eines Zugangsdienstes zu erfassen,
das Gruppierungsmodul (62) dafür angeordnet ist, den Zugangsdienst gemäß dem erfassten Dienstattributparameter und einer voreingestellten Dienstgruppierungsregel in eine Dienstgruppe zu setzen, wenn bestimmt wird, dass aktuell eine Dienstgruppe vorhanden ist, in der die Anzahl von Diensten eine Obergrenze nicht erreicht, und
das Planungsmodul (63) dafür angeordnet ist, Dienste in jeder Dienstgruppe der Reihe nach gemäß einem Gruppierungsergebnis sequenziell zu planen,
wobei das Gruppierungsmodul (62) ferner für Folgendes angeordnet ist:
wenn bestimmt wird, dass der Dienstattributparameter, gemäß dem aktuell die Dienstgruppierung durchgeführt wird, ein Dienstressourcetyp oder ein QCI-Typ ist, Bestimmen des Dienstressourcetyps oder des QCI-Typs des Zugangsdienstes gemäß dem erfassten Dienstattributparameter und Hinzufügen des Zugangsdienstes zu einer Dienstgruppe, die eine kleinste Anzahl von Diensten mit demselben Dienstressourcetyp oder QCI-Typ wie der Zugangsdienst umfasst,
wenn bestimmt wird, dass der Dienstattributparameter, gemäß dem aktuell die Dienstgruppierung durchgeführt wird, ein PDB, eine PER oder eine ARP ist, Bestimmen eines Wertes des Dienstattributparameters, gemäß dem die Dienstgruppierung durchgeführt wird, gemäß dem erfassten Dienstattributparameter und Hinzufügen des Zugangsdienstes zu einer Dienstgruppe, die eine kleinste Anzahl von Diensten mit denselben Werten von Dienstattributparametern wie der Wert des Dienstattributparameters umfasst, gemäß dem die Dienstgruppierung durchgeführt wird,
wenn bestimmt wird, dass der Dienstattributparameter, gemäß dem aktuell die Dienstgruppierung durchgeführt wird, einen ersten Attributparameter und einen zweiten Attributparameter umfasst, wobei der erste Attributparameter eine GBR und/oder eine MBR umfasst und der zweite Attributparameter eine PBR und/oder eine AMBR umfasst, und wenn bestimmt wird, dass der Dienstressourcetyp des Zugangsdienstes gemäß dem erfassten Dienstattributparameter eine GBR ist, Bestimmen eines Wertes / von Werten der GBR und/oder MBR des Zugangsdienstes gemäß dem erfassten Dienstattributparameter und Hinzufügen des Zugangsdienstes zu einer Dienstgruppe mit der kleinsten Summe von GBRs von allen Diensten oder Hinzufügen des Zugangsdienstes zu einer Dienstgruppe mit der kleinsten Summe von MBRs von allen Diensten oder Hinzufügen des Zugangsdienstes zu einer Dienstgruppe mit der kleinsten Summe von GBRs+MBRs von allen Diensten, oder
wenn bestimmt wird, dass der Dienstressourcetyp des Zugangsdienstes gemäß dem erfassten Dienstattributparameter ein NICHT-GBR-Typ ist, Bestimmen eines Wertes / von Werten der PBR und/oder AMBR des Zugangsdienstes gemäß dem erfassten Dienstattributparameter und Hinzufügen des Zugangsdienstes zu einer Dienstgruppe mit der kleinsten Summe von PBRs von allen Diensten oder Hinzufügen des Zugangsdienstes zu einer Dienstgruppe mit der kleinsten Summe von AMBRs von allen Diensten oder Hinzufügen des Zugangsdienstes zu einer Dienstgruppe mit der kleinsten Summe von GBRs+MBRs von allen Diensten, und
wenn zwei oder mehr als zwei Dienstattributparameter vorhanden sind, gemäß denen die Dienstgruppierung durchgeführt wird, Bestimmen von Prioritäten der Dienstattributparameter, gemäß denen die Dienstgruppierung durchgeführt wird, und Durchführen der Gruppierung gemäß dem Dienstattributparameter mit der höchsten Priorität.

6. Vorrichtung nach Anspruch 5, wobei der Dienstattributparameter Folgendes umfasst: eines oder mehrere von einem Dienstressourcetyp, einer Dienstgüte-(Quality of Service, QoS)Klassekennung (QCI), einem Paketlaufzeitbudget (Packet Delay Budget, PDB), einer Paketfehlerverlustrate (PER), einer garantierten Bitrate (Guaranteed Bit Rate, GBR), einer maximalen Bitrate (Maximum Bit Rate, MBR), einer aggregierten maximalen Bitrate (Aggregate Maximum Bit Rate, AMBR), einer Prioritätsbitrate (Priority Bit Rate, PBR) und einer Zuweisungs-/Erhaltungspriorität (Allocation Retention Priority, ARP).

7. Vorrichtung nach Anspruch 5 oder 6, ferner umfassend: ein Erstellungsmodul (64), das dafür angeordnet ist, eine neue Dienstgruppe zu erstellen und den Zugangsdienst zu der neuen Dienstgruppe hinzuzufügen oder den Zugang des Zugangsdienstes zu verweigern, wenn bestimmt wird, dass aktuell keine Dienstgruppe vorhanden ist, in der die Anzahl von Diensten nicht die Obergrenze erreicht.

8. Vorrichtung nach Anspruch 5 oder 6, wobei das Gruppierungsmodul (62) dafür angeordnet ist, alle Dienstgruppen zu überprüfen, Dienstgruppen, in denen die Anzahl von Diensten die Obergrenze in allen Dienstgruppen erreicht, aus einer zu gruppierenden Wartschlange zu entfernen, und wenn die zu gruppierende Warteschlange nach dem Entfernen nicht leer ist, zu bestimmen, dass eine Dienstgruppe vorhanden ist, in der die Anzahl von Diensten nicht die Obergrenze erreicht.

9. Computerspeichermedium mit darauf gespeicherten, von einem Computer ausführbaren Anweisungen, wobei die von einem Computer ausführbaren Anweisungen dafür angeordnet sind, das Dienstplanungsverfahren nach einem der Ansprüche 1 bis 4 auszuführen.

## Revendications

1. Procédé d'ordonnancement de services mis en oeuvre par une station de base, comprenant les étapes ci-dessous consistant à :
acquérir (101) un paramètre d'attribut de service d'un service d'accès ;
placer le service d'accès dans un groupe de services selon le paramètre d'attribut de service acquis et une règle de regroupement de services prédéfinie, lorsqu'il est déterminé qu'il existe actuellement un groupe de services dans lequel le nombre de services n'atteint pas une limite supérieure (102) ; et
ordonnancer séquentiellement des services dans chaque groupe de services, à tour de rôle, selon un résultat de regroupement (103) ;
dans lequel l'étape consistant à placer les services d'accès dans le groupe de services selon le paramètre d'attribut de service acquis et la règle de regroupement de services prédéfinie (102) comprend les étapes ci-dessous consistant à :
lorsqu'il est déterminé que le paramètre d'attribut de service selon lequel le regroupement de services est actuellement mis en oeuvre correspond à un type de ressources de service ou à un type d'identificateur QCI, déterminer (203) le type de ressources de service ou le type d'identificateur QCI du service d'accès selon le paramètre d'attribut de service acquis, et ajouter le service d'accès dans un groupe de services comprenant un nombre le plus petit de services présentant le même type de ressources de service ou le même type d'identificateur QCI que le service d'accès ;
lorsqu'il est déterminé que le paramètre d'attribut de service selon lequel le regroupement de services est actuellement mis en oeuvre correspond à un budget PDB, à un taux PER ou à une priorité ARP, déterminer (403) une valeur du paramètre d'attribut de service selon lequel le regroupement de services est mis en oeuvre selon le paramètre d'attribut de service acquis, et ajouter le service d'accès dans un groupe de services comprenant un nombre le plus petit de services présentant des valeurs de paramètres d'attribut de service identiques à la valeur du paramètre d'attribut de service selon lequel le regroupement de services est mis en oeuvre ;
lorsqu'il est déterminé que le paramètre d'attribut de service selon lequel le regroupement de services est actuellement mis en oeuvre comprend un premier paramètre d'attribut et un second paramètre d'attribut, le premier paramètre d'attribut comprenant un débit binaire GBR et/ou un débit binaire MBR, et le second paramètre d'attribut comprenant un débit binaire PBR et/ou un débit binaire AMBR, et lorsqu'il est déterminé que le type de ressources de service du service d'accès correspond à un type de débit binaire GBR selon le paramètre d'attribut de service acquis, déterminer (303) une ou plusieurs valeurs du débit binaire GBR et/ou du débit binaire MBR du service d'accès selon le paramètre d'attribut de service acquis, et ajouter le service d'accès dans un groupe de services présentant la plus petite somme de débits binaires GBR de tous les services, ou ajouter le service d'accès dans un groupe de services présentant la plus petite somme de débits binaires MBR de tous les services, ou ajouter le service d'accès dans un groupe de services présentant la plus petite somme de débits binaires GBR + MBR de tous les services ; ou,
lorsqu'il est déterminé que le type de ressources de service du service d'accès correspond à un type de débit binaire non garanti, Non-GBR, selon le paramètre d'attribut de service acquis, déterminer une ou plusieurs valeurs du débit binaire PBR et/ou du débit binaire AMBR du service d'accès selon le paramètre d'attribut de service acquis, et ajouter le service d'accès dans un groupe de services présentant la plus petite somme de débits binaires PBR de tous les services, ou ajouter le service d'accès dans un groupe de services présentant la plus petite somme de débits binaires AMBR de tous les services, ou ajouter le service d'accès dans un groupe de services présentant la plus petite somme de débits binaires PBR + AMBR de tous les services ; et
lorsqu'il existe deux paramètres d'attribut de service ou plus selon lesquels le regroupement de services est mis en oeuvre, déterminer des priorités des paramètres d'attribut de service selon lesquels le regroupement de services est mis en oeuvre, et mettre en oeuvre un regroupement selon le paramètre d'attribut de service présentant la priorité la plus élevée.

2. Procédé selon la revendication 1, dans lequel le paramètre d'attribut de service comprend : un ou plusieurs éléments parmi un type de ressources de service, un identificateur de classe de qualité de service, QoS, QCI, un budget de retard de paquets, PDB, un taux d'erreur sur les paquets, PER, un débit binaire garanti, GBR, un débit binaire maximum, MBR, un débit binaire maximum agrégé, AMBR, un débit binaire prioritaire, PBR, et une priorité d'allocation et de rétention, ARP.

3. Procédé selon la revendication 1 ou 2, comprenant en outre l'étape ci-dessous consistant à :
créer un nouveau groupe de services, et ajouter le service d'accès dans le nouveau groupe de services, ou refuser l'accès au service d'accès lorsqu'il est déterminé qu'il n'existe actuellement aucun groupe de services dans lequel le nombre de services n'atteint pas la limite supérieure (205, 305, 405, 507).

4. Procédé selon la revendication 1 ou 2, dans lequel l'étape consistant à déterminer qu'il existe actuellement le groupe de services dans lequel le nombre de services n'atteint pas la limite supérieure comprend les étapes ci-dessous consistant à :
filtrer tous les groupes de services, supprimer les groupes de services dans lesquels le nombre de services atteint la limite supérieure, dans tous les groupes de services, d'une file d'attente à regrouper et, si la file d'attente à regrouper, suite à la suppression, n'est pas vide, déterminer qu'il existe le groupe de services dans lequel le nombre de services n'atteint pas la limite supérieure.

5. Dispositif d'ordonnancement de services, comprenant : un module d'acquisition (61), un module de regroupement (62) et un module d'ordonnancement (63), dans lequel :
le module d'acquisition (61) est agencé de manière à acquérir un paramètre d'attribut de service d'un service d'accès ;
le module de regroupement (62) est agencé de manière à, lorsqu'il est déterminé qu'il existe actuellement un groupe de services dans lequel le nombre de services n'atteint pas une limite supérieure, placer le service d'accès dans un groupe de services selon le paramètre d'attribut de service acquis et une règle de regroupement de services prédéfinie ; et
le module d'ordonnancement (63) est agencé de manière à ordonnancer séquentiellement des services dans chaque groupe de services, à tour de rôle, selon un résultat de regroupement ;
dans lequel le module de regroupement (62) est en outre agencé de manière à :
lorsqu'il est déterminé que le paramètre d'attribut de service selon lequel le regroupement de services est actuellement mis en oeuvre correspond à un type de ressources de service ou à un type d'identificateur QCI, déterminer le type de ressources de service ou le type d'identificateur QCI du service d'accès selon le paramètre d'attribut de service acquis, et ajouter le service d'accès dans un groupe de services comprenant un nombre le plus petit de services présentant le même type de ressources de service ou le même type d'identificateur QCI que le service d'accès ;
lorsqu'il est déterminé que le paramètre d'attribut de service selon lequel le regroupement de services est actuellement mis en oeuvre correspond à un budget PDB, à un taux PER ou à une priorité ARP, déterminer une valeur du paramètre d'attribut de service selon lequel le regroupement de services est mis en oeuvre selon le paramètre d'attribut de service acquis, et ajouter le service d'accès dans un groupe de services comprenant un nombre le plus petit de services présentant des valeurs de paramètres d'attribut de service identiques à la valeur du paramètre d'attribut de service selon lequel le regroupement de services est mis en oeuvre ;
lorsqu'il est déterminé que le paramètre d'attribut de service selon lequel le regroupement de services est actuellement mis en oeuvre comprend un premier paramètre d'attribut et un second paramètre d'attribut, le premier paramètre d'attribut comprenant un débit binaire GBR et/ou un débit binaire MBR, et le second paramètre d'attribut comprenant un débit binaire PBR et/ou un débit binaire AMBR, et lorsqu'il est déterminé que le type de ressources de service du service d'accès correspond à un type de débit binaire GBR selon le paramètre d'attribut de service acquis, déterminer une ou plusieurs valeurs du débit binaire GBR et/ou du débit binaire MBR du service d'accès selon le paramètre d'attribut de service acquis, et ajouter le service d'accès dans un groupe de services présentant la plus petite somme de débits binaires GBR de tous les services, ou ajouter le service d'accès dans un groupe de services présentant la plus petite somme de débits binaires MBR de tous les services, ou ajouter le service d'accès dans un groupe de services présentant la plus petite somme de débits binaires GBR + MBR de tous les services ; ou,
lorsqu'il est déterminé que le type de ressources de service du service d'accès correspond à un type de débit binaire non garanti, « Non-GBR », selon le paramètre d'attribut de service acquis, déterminer une ou plusieurs valeurs du débit binaire PBR et/ou du débit binaire AMBR du service d'accès selon le paramètre d'attribut de service acquis, et ajouter le service d'accès dans un groupe de services présentant la plus petite somme de débits binaires PBR de tous les services, ou ajouter le service d'accès dans un groupe de services présentant la plus petite somme de débits binaires AMBR de tous les services, ou ajouter le service d'accès dans un groupe de services présentant la plus petite somme de débits binaires PBR + AMBR de tous les services ; et
lorsqu'il existe deux paramètres d'attribut de service ou plus selon lesquels le regroupement de services est mis en oeuvre, déterminer des priorités des paramètres d'attribut de service selon lesquels le regroupement de services est mis en oeuvre, et mettre en oeuvre un regroupement selon le paramètre d'attribut de service présentant la priorité la plus élevée.

6. Dispositif selon la revendication 5, dans lequel le paramètre d'attribut de service comprend : un ou plusieurs éléments parmi un type de ressources de service, un identificateur de classe de qualité de service, QoS, QCI, un budget de retard de paquets, PDB, un taux d'erreur sur les paquets, PER, un débit binaire garanti, GBR, un débit binaire maximum, MBR, un débit binaire maximum agrégé, AMBR, un débit binaire prioritaire, PBR, et une priorité d'allocation et de rétention, ARP.

7. Dispositif selon la revendication 5 ou 6, comprenant en outre : un module de création (64), agencé de manière à, lorsqu'il est déterminé qu'il n'existe actuellement aucun groupe de services dans lequel le nombre de services n'atteint pas la limite supérieure, créer un nouveau groupe de services, et ajouter le service d'accès dans le nouveau groupe de services, ou refuser l'accès au service d'accès.

8. Dispositif selon la revendication 5 ou 6, dans lequel le module de regroupement (62) est agencé de manière à filtrer tous les groupes de services, supprimer les groupes de services dans lesquels le nombre de services atteint la limite supérieure, dans tous les groupes de services, d'une file d'attente à regrouper, et déterminer qu'il existe le groupe de services dans lequel le nombre de services n'atteint pas la limite supérieure dans le cas où la file d'attente à regrouper, suite à la suppression, n'est pas vide.

9. Support de stockage informatique dans lequel sont stockées des instructions exécutables par ordinateur, les instructions exécutables par ordinateur étant agencées de manière à exécuter le procédé d'ordonnancement de services selon l'une quelconque des revendications 1 à 4.
